(19) Europäisches Patentamt
European Patent Office
Office européen des brevets

(11) **EP 2 918 546 A1**

(12) **EUROPEAN PATENT APPLICATION**
published in accordance with Art. 153(4) EPC

(43) Date of publication:
**16.09.2015 Bulletin 2015/38**

(51) Int Cl.:
***C01F 7/02*** *(2006.01)*

(21) Application number: **13852446.7**

(22) Date of filing: **30.04.2013**

(86) International application number:
**PCT/JP2013/062591**

(87) International publication number:
**WO 2014/073228 (15.05.2014 Gazette 2014/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.11.2012 JP 2012244729**

(71) Applicant: **Kawai Lime Industry Co., Ltd.
Gifu 503-2291 (JP)**

(72) Inventors:
• **OTA, Yasuhiro**
**Ogaki-shi**
**Gifu 503-2291 (JP)**

• **MIZUTANI, Masashi**
**Ogaki-shi**
**Gifu 503-2291 (JP)**
• **KIDO, Kenji**
**Ogaki-shi**
**Gifu 503-2291 (JP)**
• **KAWAI, Tokio**
**Ogaki-shi**
**Gifu 503-2291 (JP)**
• **KIHOU, Hirokazu**
**Ogaki-shi**
**Gifu 503-2291 (JP)**

(74) Representative: **Beacham, Annabel Rose
Dehns
St Bride's House
10 Salisbury Square
London EC4Y 8JD (GB)**

(54) **HIGH THERMAL CONDUCTIVE BOEHMITE AND METHOD FOR MANUFACTURING SAME**

(57) Provided are high thermal conductive boehmite, which has the characteristics of boehmite such as flame retardancy and high filling and yet has an improved thermal conductivity, and a method for manufacturing the high thermal conductive boehmite. The high thermal conductive boehmite is characterized by having thermal conductivity calculated in accordance with the following Mathematical Formula 1 of 11.0 W/m·K or greater;

[Mathematical Formula 1]

$$1 - Vf = (\lambda c - \lambda f)/(\lambda m - \lambda f) \times (\lambda m/\lambda c)^{\wedge}(1/n)$$

$$n = 3/\psi$$

(with the proviso that, Vf represents the volume filling ratio of boehmite, $\lambda c$ represents the thermal conductivity (W/m·K) of a boehmite-resin composite, $\lambda f$ represents the thermal conductivity (W/m·K) of boehmite, $\lambda m$ represents the thermal conductivity (W/m·K) of the resin, n represents the shape factor of filler particles proposed by Hamilton and Crosser, $\psi$ represents a value calculated by dividing the surface area of a sphere that has the same volume of a boehmite particle volume by the surface area of an actual particle, and ^ represents exponentiation).

EP 2 918 546 A1

| INORGANIC FILLER | THERMAL CONDUCTIVITY | PRICE | INSULATING PROPERTY | WEIGHT | HARDNESS | F L A M I N G RETARDANCY | FILLING PROPERTY |
|---|---|---|---|---|---|---|---|
| METAL POWDER | ◎ | × | × | × | ○ | × | × |
| NITRIDE | ◎ | × | ○ | ○ | × | × | × |
| CARBIDE | ◎ | × | △ | ○ | × | × | × |
| α-ALUMINA | ○ | ○ | ○ | ○ | × | × | × |
| SILICA | △ | ○ | ○ | ○ | × | × | ◎ |
| BOEHMITE (CONVENTIONAL PRODUCT) | △ | ◎ | ○ | ○ | ○ | ○ | ○ |

◎ : EXCELLENT , ○ : GOOD、 △ : ACCEPTABLE、 × : NOT ACCEPTABLE

Fig. 1

**Description**

TECHNICAL FIELD

The present invention relates to boehmite having high thermal conductivity and a method for manufacturing the boehmite.

BACKGROUND ART

As an electronic device having high performance, a small size, and light weight is produced in recent years, high-density mounting of electronic compartments or high integration and fast speed of LSI is also performed, yielding a tendency of having high heat generation from electronic compartments. As such, a decrease in performance of electronic compartments may be caused if efficient cooling is not carried out. For such reasons, effective diffusion of heat from electronic compartments to outside is an important task to achieve. Also in LED which is used for liquid display or a head light of an automobile, light amount is reduced by heat accumulation on LED chips, and thus it is necessary to have heat diffusion. Since those electronic compartments and LED chip are mounted on an electronic board, it is desirable to promote heat diffusion by increasing thermal conductivity of an electronic board.

Due to a good molding property and low cost, a resin board is used as an electronic board of a related art. However, since a resin has low thermal conductivity, a metal board or a ceramic board is used for an electronic board required to have thermal conductivity. However, by having electrical conductivity, the metal board cannot have electronic compartments directly mounted thereon, and it also has a problem of heavy weight, high cost, or the like. The ceramic board also has a problem like a difficulty in forming a complex pattern and high cost. Thus, it has been believed that using a resin board is still preferable.

In this regard, as a method for having heat diffusion by enhancing thermal conductivity of a resin board, there is a method of filling a thermal conductive inorganic filler in a resin for constituting an electronic board or electronic compartments (see, Patent Document 1 and Patent Document 2).

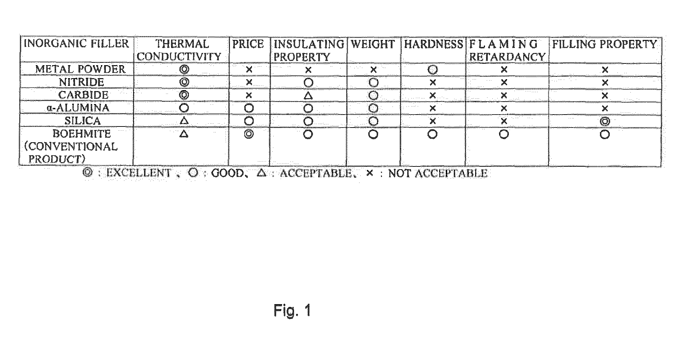

As a thermal conductive inorganic filler used in a related art, there are metal powder (silver, copper, alumina, or the like), nitrides (aluminum nitride, boron nitride, silicon nitride, or the like), carbides (silicon carbide or the like), $\alpha$-alumina, silica, or the like. With regard to the properties of various inorganic fillers, there are pros and cons as illustrated in Fig. 1. Metal powder, nitrides, and carbides are advantageous in that they have excellent thermal conductivity. However, there is a disadvantage of high cost. Furthermore, the inorganic filler to be filled in a resin for constituting an electronic board or electronic compartments is required to have high conductivity. In this regard, metal powder is disadvantageous in that it has electrical conductivity and a low insulating property. Furthermore, since a drill may be easily worn when an inorganic filler to be filled in a resin for forming a hole on an electronic board has high hardness, the inorganic filler is required to have low hardness. In this regard, by having high hardness, the nitrides, carbides, $\alpha$-alumina, and silica have a problem that they have a poor drill processability.

Meanwhile, there is boehmite as an inorganic filler which has been widely used in a related art as a flame retardant, a reinforcing material, a glittering material, or the like. As illustrated in Fig. 1, boehmite is particularly inexpensive and has an excellent insulating property, weight, hardness, and flame retardancy when compared to other inorganic filler. Furthermore, as it can be easily synthesized with controlled crystal morphology, it is also excellent in that high thermal conductivity can be obtained even with the same amount by enhancing the filling property to have high filling in electronic compartments with lowering of specific surface area or lowering of aspect ratio, or by creating a thermal conductive path (a path for heat transfer) according to increase of the aspect ratio. As such, if it can be used as an inorganic filler with thermal conductivity, boehmite can be very useful.

CITATION LIST

PATENT DOCUMENT

Patent Document 1: JP 2011-184507 A
Patent Document 2: JP 2011-127053 A

## SUMMARY OF THE INVENTION

### PROBLEM TO BE SOLVED BY THE INVENTION

However, boehmite has a problem in that it has poorer thermal conductivity than other inorganic filler. As such, its use as a thermal conductive inorganic filler for heat diffusion has been limited in a related art.

The present invention is devised under the circumstances described above, and an object of the present invention is to provide high thermal conductive boehmite having the characteristics of boehmite such as flame retardancy and high filling and yet has an improved thermal conductivity, and a method for manufacturing the high thermal conductive boehmite.

### MEANS FOR SOLVING PROBLEM

To solve the problems described above, the inventors of the present invention conducted various determinations, and thus completed the present invention. Specifically, the present invention relates to high thermal conductive boehmite having thermal conductivity calculated in accordance with the following Mathematical Formula 1 of 11.0 W/m·K or greater.

[Mathematical Formula 1]

$$1 - Vf = (\lambda c - \lambda f)/(\lambda m - \lambda f) \times (\lambda m/\lambda c)^{\wedge}(1/n)$$

$$n = 3/\psi$$

(with the proviso that, Vf represents the volume filling ratio of boehmite, $\lambda c$ represents the thermal conductivity (W/m·K) of a boehmite-resin composite, $\lambda f$ represents the thermal conductivity (W/m·K) of boehmite, $\lambda m$ represents the thermal conductivity (W/m·K) of the resin; n represents the shape factor of filler particles proposed by Hamilton and Crosser, $\psi$ represents a value calculated by dividing the surface area of a sphere that has the same volume of a boehmite particle volume by the surface area of an actual particle, and ^ represents exponentiation).

Mathematical Formula 1 is referred to as Kanari's equation and it is a mathematical formula used for analyzing thermal conductivity of a composite material like a polymer material blended with a filler (Katsuhiko Kanari: Thermal Conductivity of Composite System, Polymer, Vol. 26, No. 8, pp. 557-561, 1977).

In Mathematical Formula 1, the volume filling ratio (Vf) of boehmite is obtained as described below.

Vf = A ÷ (A + B) (A: a value obtained by dividing the mass of boehmite blended in resin by the specific gravity, B: a value obtained by dividing the mass of resin by the specific gravity)

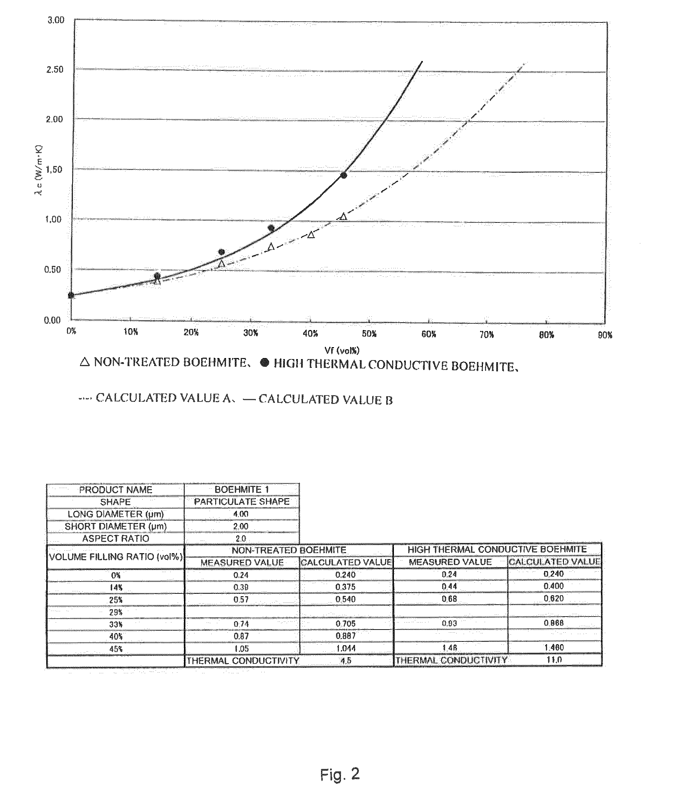

Meanwhile, Vf in Table 1 to Table 5 and Fig. 2 to Fig. 6 is described as vol%. $\psi$ in Mathematical Formula 1 is obtained as described below.

$$\psi = \{(9\pi z)^{\wedge}(1/3)\}/\{z + (8)^{\wedge}(1/2)\}$$

z: aspect ratio of boehmite

The gist of the present invention is high thermal conductive boehmite having the 700°C dehydration amount of 14.0% to 15.7%. As described herein, the 700°C dehydration amount means the ratio of the reduced mass represented in terms of % when the temperature is increased to 700°C while the dehydration amount at 100°C is 0%.

The gist of the present invention is a method for manufacturing high thermal conductive boehmite which is characterized in that boehmite is heat treated at 320°C to 430°C.

With regard to the method for manufacturing thermal conductive boehmite, boehmite may be heat treated in an atmosphere of increased pressure. The boehmite may be also heat treated using over-heated water vapor.

### EFFECT OF THE INVENTION

Since the high thermal conductive boehmite of the present invention has increased thermal conductivity while maintaining the characteristics of boehmite, it is excellent in terms of cost, insulating property, weight, and hardness. Furthermore, a thermal conductive inorganic filler having flame retardancy and high filling, which are the characteristics of boehmite, can be provided.

The method for manufacturing the high thermal conductive boehmite of the present invention only needs a heating treatment of boehmite as a raw material, and thus high thermal conductive boehmite can be manufactured simply at low cost.

BRIEF DESCRIPTION OF DRAWINGS

Fig. 1 is a table showing the evaluation of the characteristics of thermal conductive inorganic filler. Symbols for the evaluation indicate a result of relative evaluation of the characteristics of the inorganic filler in the table.

Fig. 2 includes a graph ("Vf-$\lambda$c" curve closest to the plot), which has been established based on a plot of measured values of thermal conductivity (thermal conductivity of a boehmite-resin composite) $\lambda$c of a resin blended with each of the high thermal conductive boehmite of Examples 1, 4, 5, and 7 and the non-treated boehmite of Comparative Examples 1, 2, 4, 7, and 10 and Mathematical Formula 1, and a table showing the measured values and calculated values. The non-treated boehmite and high thermal conductive boehmite in the drawing represent a composite with a resin blended with the non-treated boehmite and a composite with a resin blended with high thermal conductive boehmite, respectively.

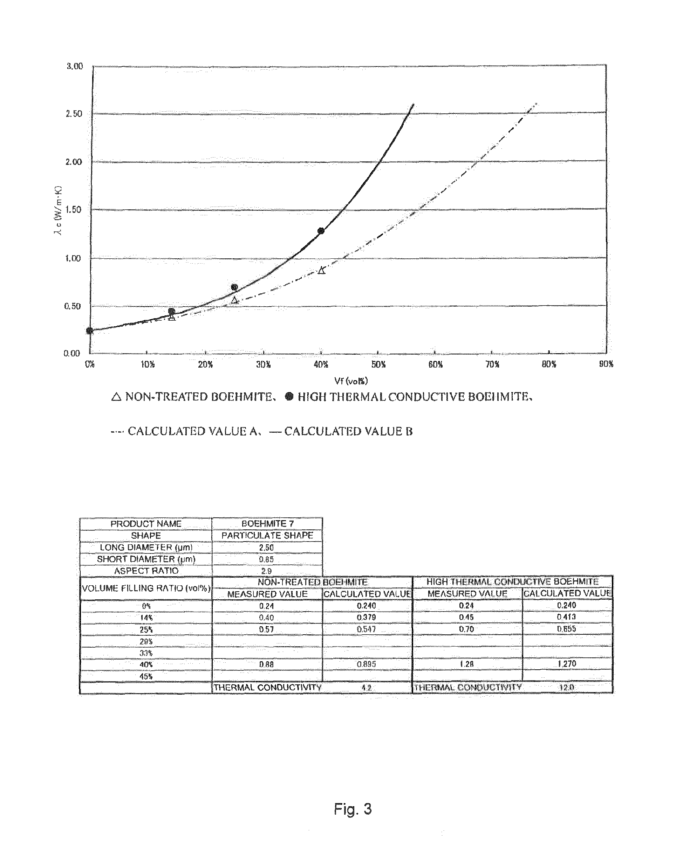

Fig. 3 includes a graph ("Vf-$\lambda$c" curve closest to the plot), which has been established based on a plot of measured values of thermal conductivity (thermal conductivity of a boehmite-resin composite) $\lambda$c of a resin blended with each of the high thermal conductive boehmite of Example 27 to Example 29 and the non-treated boehmite of Comparative Example 25 to Comparative Example 27 and Mathematical Formula 1, and a table showing the measured values and calculated values. The non-treated boehmite and high thermal conductive boehmite in the drawing represent a composite with a resin blended with the non-treated boehmite and a composite with a resin blended with high thermal conductive boehmite, respectively.

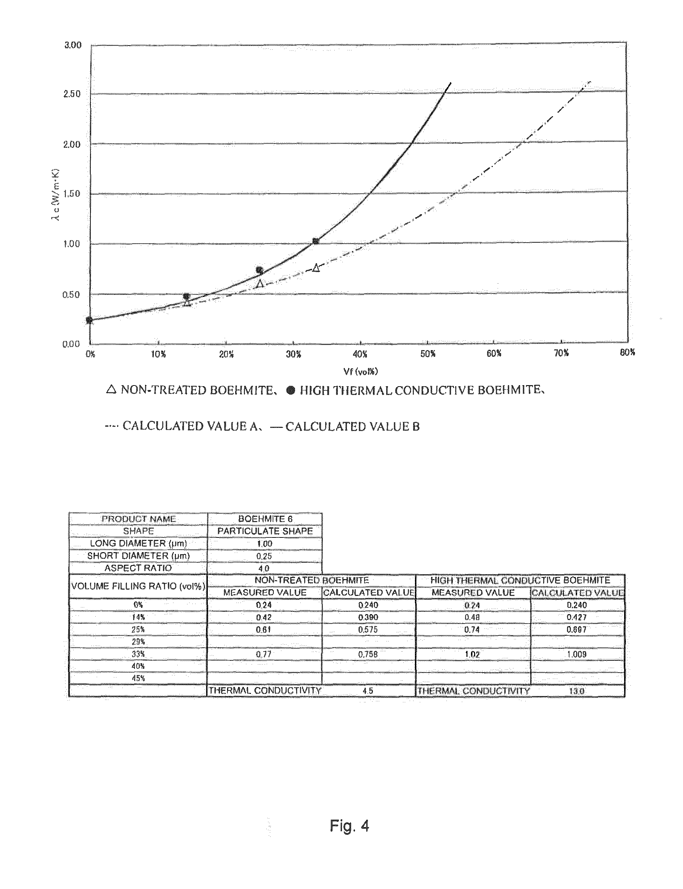

Fig. 4 includes a graph ("Vf-$\lambda$c" curve closest to the plot), which has been established based on a plot of measured values of thermal conductivity (thermal conductivity of a boehmite-resin composite) $\lambda$c of a resin blended with each of the high thermal conductive boehmite of Example 30 to Example 32 and the non-treated boehmite of Comparative Example 28 to Comparative Example 30 and Mathematical Formula 1, and a table showing the measured values and calculated values. The non-treated boehmite and high thermal conductive boehmite in the drawing represent a composite with a resin blended with the non-treated boehmite and a composite with a resin blended with high thermal conductive boehmite, respectively.

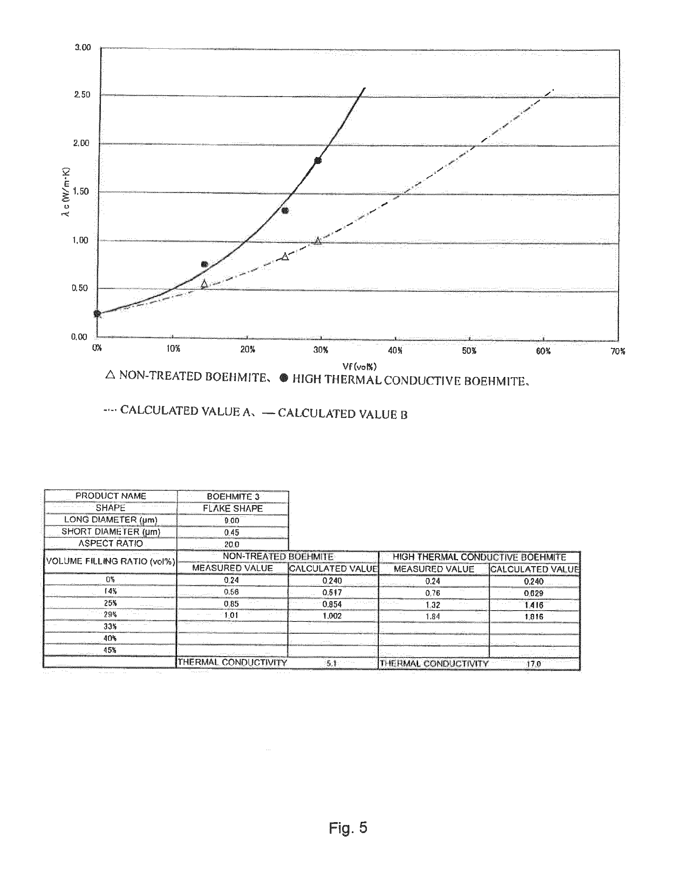

Fig. 5 includes a graph ("Vf-$\lambda$c" curve closest to the plot), which has been established based on a plot of measured values of thermal conductivity (thermal conductivity of a boehmite-resin composite) $\lambda$c of a resin blended with each of the high thermal conductive boehmite of Example 33 to Example 35 and the non-treated boehmite of Comparative Example 31 to Comparative Example 33 and Mathematical Formula 1, and a table showing the measured values and calculated values. The non-treated boehmite and high thermal conductive boehmite in the drawing represent a composite with a resin blended with the non-treated boehmite and a composite with a resin blended with high thermal conductive boehmite, respectively.

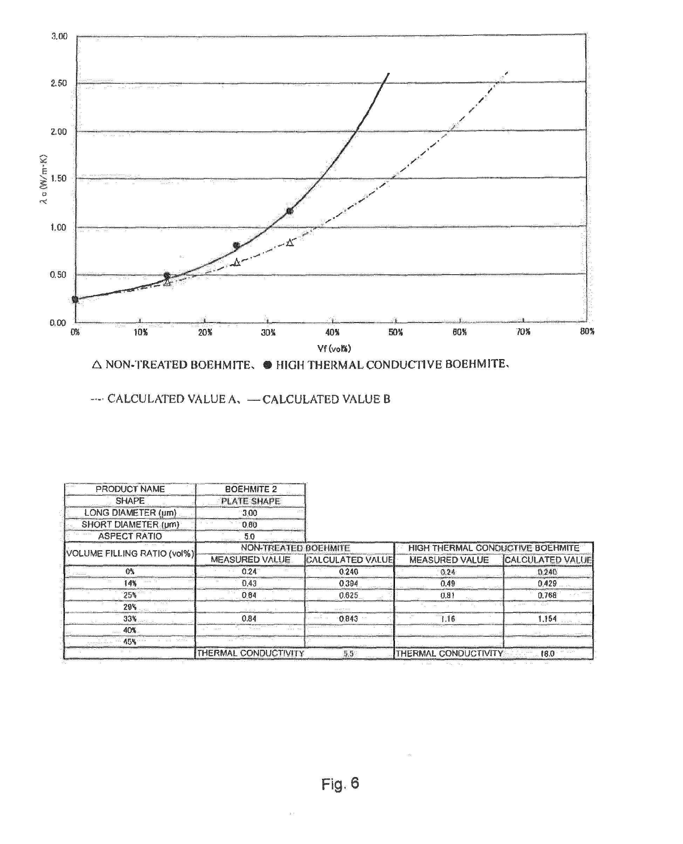

Fig. 6 includes a graph ("Vf-$\lambda$c" curve closest to the plot), which has been established based on a plot of measured values of thermal conductivity (thermal conductivity of a boehmite-resin composite) $\lambda$c of a resin blended with each of the high thermal conductive boehmite of Example 36 to Example 38 and the non-treated boehmite of Comparative Example 34 to Comparative Example 36 and Mathematical Formula 1, and a table showing the measured values and calculated values. The non-treated boehmite and high thermal conductive boehmite in the drawing represent a composite with a resin blended with the non-treated boehmite and a composite with a resin blended with high thermal conductive boehmite, respectively.

MODE(S) FOR CARRYING OUT THE INVENTION

The high thermal conductive boehmite of the present invention can be manufactured by performing a heating treatment of boehmite at a pre-determined temperature. As for the boehmite to be a raw material, any boehmite can be used without being limited by a method for manufacturing boehmite (for example, boehmite synthesized from aluminum hydroxide by hydrothermal synthesis, boehmite synthesized by adding an additive to aluminum hydroxide followed by hydrothermal synthesis, boehmite synthesized from boehmite precursor which has been synthesized from various aluminum salts or aluminum alkoxides, boehmite hydrated by a hydrothermal treatment of transition alumina, boehmite synthesized from aluminum dawsonite, and natural boehmite), a shape of boehmite (for example, plate shape boehmite, needle shape boehmite, flake shape boehmite, cubic shape boehmite, disc shape boehmite, and boehmite in aggregated form), a size of a primary particle of boehmite, or the like.

Boehmite is monohydrate of alumina, and with the dehydration according to the following reaction, the theoretical value of the dehydration amount is 15%.

$$2AlOOH \rightarrow Al_2O_3 + H_2O$$

A larger or smaller dehydration amount than the theoretical value indicates that impurities are contained. As the dehydration amount becomes lower than the theoretical value of 15%, more γ-alumina is contained. Further, as the dehydration amount becomes higher than the theoretical value of 15%, more aluminum hydroxide or pseudo boehmite is contained. For such reasons, the 700°C dehydration amount is preferably 14.0% to 15.7%, and more preferably 14.5% to 15.2%. That is because, when the 700°C dehydration amount is lower than 14.0%, the thermal conductivity is lowered due to generation of γ-alumina, and when it is higher than 15.7%, the thermal conductivity is lowered due to generation of pseudo boehmite.

When γ-alumina is generated by excessive heating of boehmite as a raw material, a specific surface area is increased. For such reasons, the specific surface area of the high thermal conductive boehmite is preferably 95% to 1114%, and more preferably 100% to 110% of the specific surface area of the boehmite as a raw material. There are rarely cases in which the specific surface area is reduced by a heating treatment. However, it has been demonstrated that, when it is lower than 95%, crystal growth progresses to disrupt the crystal morphology, which is not desirable. On the other hand, when it is higher than 114%, it has been demonstrated that γ-alumina is generated to impair not only the thermal conductivity but also the flame retardancy and filling property, which is not desirable.

The heating treatment of boehmite as a raw material is preferably performed under increased pressure. It is more preferable to perform the treatment under increased pressure containing water vapor. That is because, by performing the heating under increased pressure and increased pressure containing water vapor, generation of y-alumina which is caused by dehydration of boehmite is suppressed. The pressure is preferably higher than atmospheric pressure and the same or lower than 2 MPa. When it is higher than 2 MPa, it is not expected to have the effect of having suppressed generation of γ-alumina while expensive pressure-resistant facilities are still required for the treatment, and thus it is not economically favorable.

The heating treatment of the boehmite as a raw material is preferably performed using over-heated water vapor. That is because, when the heating is performed using over-heated water vapor, generation of γ-alumina which is caused by dehydration of boehmite is suppressed.

The heating temperature for manufacturing the high thermal conductive boehmite is preferably 320°C to 430°C, and more preferably 350°C to 400°C. That is because, when the heating temperature is lower than 320°C, the thermal conductivity of boehmite as a raw material is not increased to a sufficient level, and when it is higher than 430°C, the boehmite as a raw material can easily convert to γ-alumina with low thermal conductivity. Meanwhile, the heating temperature of 320°C to 430°C indicates the temperature of the boehmite itself as a raw material to be heated, and the heating temperature of a heating device may be higher than this temperature range. For example, in the case of atomizer heating or small-amount heating, it is possible that the boehmite itself as a raw material is heated to the temperature of 320°C to 430°C within a short time like several seconds with the heating device temperature of 800°C to 1000°C.

The method for heating treatment is not particularly limited, as long as it allows a heating treatment at a pre-determined temperature. Examples thereof include a stationary method like a shelf type dryer or an electronic furnace, a stirring method like a stirring wing type, a paddle mixer type, a rotation drum type, and a rotary type, a fluid bed type, an atomizer type, a spray type, and a free-fall type within a heating pipe. Furthermore, the heating source is not particularly limited as long as it allows heating at a pre-determined temperature, and examples thereof include an electric heater for heating, a gas burner, hot wave, microwave, and induced heating.

The heating time may vary depending on the aforementioned methods for heating treatment, and it is not particularly limited. For example, the stirring type method has good heating efficiency, and thus the heating time can be short. The atomizer type has a small process amount per unit time, and thus the treatment can be performed within an even shorter time. When the heating time is extended, the thermal conductivity is improved even for the same heating treatment method. However, when it is excessively long, γ-alumina is generated, which is not desirable. As for the heating time, 3 hours/350°C can be exemplified for the stationary method. However, it is generally 2 to 10 hours at 320°C to 430°C. Furthermore, 0.5 hour/350°C and several seconds/400°C can be exemplified for the stirring type and the atomizer type, respectively.

The resin to be blended with the high thermal conductive boehmite is not particularly limited, and examples thereof include an epoxy resin, a silicone resin, a melamine resin, a urea resin, a phenol resin, unsaturated polyester, a fluororesin, polyamide such as polyimide, polyamide imide, or polyether imide, polyester such as polybutylene terephthalate or polyethylene terephthalate, polyphenylene sulfide, wholly-aromatic polyester, liquid crystalline polymer, polysulfone, polyether sulfone, polycarbonate, a maleimide-modified resin, an ABS resin, an acrylonitrile-acryl rubber · styrene resin, an acrylonitirle · ethylene · propylene·diene rubber-styrene resin, and a general-purpose resin such as polyethylene, polypropylene, polyvinyl chloride, or polystyrene.

Regarding a mechanism relating to increased thermal conductivity according to the heating treatment of boehmite as a raw material, it is believed that the mechanism is exhibited as the crystal defects that are present in boehmite as a raw material are removed or re-arranged.

EXAMPLES

[Manufacture of high thermal conductive boehmite (1)]

As for the boehmite as a raw material of Examples and Comparative Examples shown in Table 1, Boehmite 1 shown in Table 6 was used. In Example 1 to Example 8, the boehmite as a raw material was subjected to a heating treatment at a pre-determined temperature for a pre-determined time by using a stationary electric furnace to manufacture the high thermal conductive boehmite of the present invention shown in Table 1, which was then blended with a resin. In Comparative Examples 1, 2, 4, 7, and 10, as boehmite as a raw material, non-treated boehmite without undergoing the heating treatment was blended with a resin. In Comparative Examples 3, 5, 8, and 11, the boehmite as a raw material was subjected to a heating treatment at 450°C by using a stationary electric furnace and then the high thermal conductive boehmite with partial γ-alumination (hereinbelow, referred to as "γ-aluminated high thermal conductive boehmite") was blended with a resin. In Comparative Examples 6, 9, and 12, the boehmite as a raw material was subjected to a heating treatment for a pre-determined time at 1250°C by using a stationary electric furnace and then the obtained α-alumina was blended with a resin. After blending the resin with each of the high thermal conductive boehmite, non-treated boehmite, γ-aluminated high thermal conductive boehmite, and α-alumina, thermal conductivity of the resin was measured.

To 40 g of an epoxy resin (manufactured by The Dow Chemical Company, DER-331J), the high thermal conductive boehmite for Examples, the non-treated boehmite for Comparative Examples 1, 2, 4, 7, and 10, the γ-aluminated high thermal conductive boehmite for Comparative Example 3, 5, 8, and 11, or α-alumina for Comparative Examples 6, 9, and 12 was weighed and added to a vessel at a ratio to have the volume filling ratio shown in Table 1. Then, by using a rotation and revolution mixer (manufactured by THINKY CORPORATION, ARE-310), they were stirred and mixed for 2 minutes at revolution of 2000 rpm · rotation of 1200 rpm.

To the resultant, 0.8 g (2% by weight relative to the epoxy resin) of 2-ethyl-4-methylimidazole (manufactured by Wako Pure Chemical Industries, Ltd.) was added as an initiator. It was then mixed for 2 minutes at revolution of 2000 rpm · rotation of 1200 rpm by using a planetary stirrer. An operation for deaeration treatment was further performed for 2 minutes. After that, it was subjected to a vacuum deaeration treatment and cured by heating for 2 hours at 120°C to obtain a test sample of Examples and Comparative Examples for measuring thermal conductivity. The obtained test sample for measuring thermal conductivity was cut to yield a test specimen of 40 mm x 40 mm x 20 mm and maintained for 2 hours or longer in an incubator at 25°C. After that, the test specimen was used for measuring the thermal conductivity of the resin by using a quick thermal conductivity meter (manufactured by KYOTO ELECTRONICS MANUFACTURING CO., LTD. QTM-500). Furthermore, in the column of "Characteristics of filler" in Table 1, the 700°C dehydration amount and specific surface area for each of the high thermal conductive boehmite, non-treated boehmite, γ-aluminated high thermal conductive boehmite, and α-alumina are shown. Meanwhile, the 700°C dehydration amount was measured by thermogravimetry using a thermogravimetric analyzer (manufactured by Bruker AXS). Furthermore, the specific surface area was measured by using an automatic specific surface area/pore distribution measurement device (manufactured by BEL JAPAN, INC. BELSORP mini) followed by analysis based on BET method.

[Table 1]

| | Conditions for heating treatment | | | Evaluation of thermal conductivity | | Characteristics of filler | |
|---|---|---|---|---|---|---|---|
| | Method/device for heating treatment | Temperature (°C) | Time (Hr) | Volume filling ratio (vol%) | Thermal conductivity (W/m·K) | 700°C Dehydration amount (%) | Specific surface area (m$^2$/g) |
| Comparative Example 1 | | | | 45 | 1.05 | 16.3 | 2.0 |
| Example 1 | Stationary electric furnace | 350 | 10 | 45 | 1.46 | 14.9 | 2.0 |
| Example 2 | Stationary electric furnace | 400 | 10 | 45 | 1.47 | 14.4 | 2.0 |
| Comparative Example 2 | | | | 40 | 0.87 | 16.3 | 2.0 |

(continued)

| | Conditions for heating treatment | | | Evaluation of thermal conductivity | | Characteristics of filler | |
|---|---|---|---|---|---|---|---|
| | Method/device for heating treatment | Temperature (°C) | Time (Hr) | Volume filling ratio (vol%) | Thermal conductivity (W/m·K) | 700°C Dehydration amount (%) | Specific surface area (m$^2$/g) |
| Example 3 | Stationary electric furnace | 400 | 10 | 40 | 1.16 | 14.4 | 2.0 |
| Comparative Example 3 | Stationary electric furnace | 450 | 10 | 40 | 1.01 | 10.7 | 10.2 |
| Comparative Example 4 | | | | 33 | 0.74 | 16.3 | 2.0 |
| Example 4 | Stationary electric furnace | 350 | 10 | 33 | 0.93 | 14.9 | 2.0 |
| Comparative Example 5 | Stationary electric furnace | 450 | 10 | 33 | 0.79 | 10.7 | 10.2 |
| Comparative Example 6 | Stationary electric furnace | 1250 | 10 | 33 | 1.11 | 0.0 | 2.3 |
| Comparative Example | | | | 25 | 0.57 | 16.3 | 2.0 |
| Example 5 | Stationary electric furnace | 350 | 10 | 25 | 0.68 | 14.9 | 2.0 |
| Example 6 | Stationary electric furnace | 400 | 10 | 25 | 0.69 | 14.4 | 2.0 |
| Comparative Example 8 | Stationary electric furnace | 450 | 10 | 25 | 0.61 | 10.7 | 10.2 |
| Comparative Example 9 | Stationary electric furnace | 1250 | 10 | 25 | 0.79 | 0.0 | 2.3 |
| Comparative Example 10 | | | | 14 | 0.39 | 16.3 | 2.0 |
| Example 7 | Stationary electric furnace | 350 | 10 | 14 | 0.44 | 14.9 | 2.0 |
| Example 8 | Stationary electric furnace | 400 | 10 | 14 | 0.43 | 14.4 | 2.0 |
| Comparative Example 11 | Stationary electric furnace | 450 | 10 | 14 | 0.41 | 10.7 | 10.2 |
| Comparative Example 12 | Stationary electric furnace | 1250 | 10 | 14 | 0.48 | 0.0 | 2.3 |

From Table 1, it was found that the thermal conductivity of Examples in which the high thermal conductive boehmite is blended with a resin is higher than that of Comparative Examples in which the non-treated boehmite is blended with a resin. Furthermore, the 700°C dehydration amount of the high thermal conductive boehmite of Examples is within a range of 14.4% to 14.9%. The thermal conductivity of Comparative Examples in which the γ-aluminated high thermal conductive boehmite is blended with a resin is lower than that of Examples. The thermal conductivity of Comparative Examples in which the α-alumina is blended with a resin is higher than that of Examples. Although α-alumina has high thermal conductivity, it is necessary for the boehmite as a raw material to be subjected to a heating treatment at a high temperature above 1000°C for a pre-determined time so that it becomes more expensive than the high thermal conductive boehmite. Further, since it is not a hydrate, it has no flame retardancy. In the γ-aluminated high thermal conductive boehmite of Comparative Examples 3, 5, 8, and 11, a significant amount of the boehmite as a raw material is converted to γ-alumina instead of a hydrate so that the 700°C dehydration amount is lowered compared to the non-treated boehmite. In the α-alumina of Comparative Examples 6, 9, and 12, the boehmite as a raw material is converted to α-alumina so that the 700°C dehydration amount was 0%. The specific surface area of the high thermal conductive boehmite of Examples is not different from the specific surface area of the non-treated boehmite of Comparative Examples, and almost no boehmite as a raw material was γ-aluminated or converted to pseudo boehmite.

[Manufacture of high thermal conductive boehmite (2)]

As for the boehmite as a raw material of Example 9 to Example 13 and Comparative Example 13 to Comparative Example 18 shown in Table 2, Boehmite 3 shown in Table 6 was used. As for the boehmite as a raw material of Example 14 to Example 19 and Comparative Example 19, Boehmite 4 shown in Table 6 was used. In Example 9 to Example 19, the boehmite as a raw material was subjected to a heating treatment at a pre-determined temperature for a pre-determined time by using a stationary electric furnace to manufacture the high thermal conductive boehmite of the present invention shown in Table 2, which was then blended with a resin. In Comparative Example 14 to Comparative Example 18, the heat-treated boehmite which has been subjected to a heating treatment at 280°C or 300°C for a pre-determined time was blended with a resin. In Comparative Example 13 and Comparative Example 19, as boehmite as a raw material, non-treated boehmite without undergoing the heating treatment was blended with a resin. Blending the high thermal conductive boehmite, heat-treated boehmite, and non-treated boehmite with a resin (blending amount of the high thermal conductive boehmite, heat-treated boehmite, and non-treated boehmite was set to the ratio for having the volume filling ratio shown in Table 2), measurement of the thermal conductivity, measurement of the 700°C dehydration amount, and measurement of the specific surface area were performed in the same manner as Manufacture of high thermal conductive boehmite (1).

[Table 2]

| | Conditions for heating treatment | | | Evaluation of thermal conductivity | | Characteristics of filler | |
|---|---|---|---|---|---|---|---|
| | Method/device for heating treatment | Temperature (°C) | Time (Hr) | Volume filling ratio (vol%) | Thermal conductivity (W/m·K) | 700°C Dehydration amount (%) | Specific surface area (m²/g) |
| Comparative Example 13 | | | | 8 | 0.43 | 16.2 | 3.0 |
| Comparative Example 14 | Stationary electric furnace | 280 | 4 | 8 | 0.47 | 16.2 | 3.0 |
| Comparative Example 15 | Stationary electric furnace | 280 | 10 | 8 | 0.47 | 16.2 | 3.0 |
| Comparative Example 16 | Stationary electric furnace | 300 | 2 | 8 | 0.48 | 16.2 | 3.0 |
| Comparative Example 17 | Stationary electric furnace | 300 | 4 | 8 | 0.49 | 16.0 | 3.0 |
| Comparative Example 18 | Stationary electric furnace | 300 | 10 | 8 | 0.50 | 16.1 | 3.0 |
| Example 9 | Stationary electric furnace | 320 | 4 | 8 | 0.53 | 15.7 | 3.0 |
| Example 10 | Stationary electric furnace | 350 | 2 | 8 | 0.57 | 15.6 | 3.0 |
| Example 11 | Stationary electric furnace | 330 | 10 | 8 | 0.58 | 15.6 | 3.0 |
| Example 12 | Stationary electric furnace | 350 | 4 | 8 | 0.59 | 15.4 | 3.0 |

(continued)

| | Conditions for heating treatment | | | Evaluation of thermal conductivity | | Characteristics of filler | |
|---|---|---|---|---|---|---|---|
| | Method/device for heating treatment | Temperature (°C) | Time (Hr) | Volume filling ratio (vol%) | Thermal conductivity (W/m·K) | 700°C Dehydration amount (%) | Specific surface area (m²/g) |
| Example 13 | Stationary electric furnace | 350 | 10 | 8 | 0.61 | 15.2 | 3.0 |
| Comparative Example 19 | | | | 8 | 0.41 | 16.4 | 4.0 |
| Example 14 | Stationary electric furnace | 330 | 4 | 8 | 0.55 | 15.7 | 4.0 |
| Example 15 | Stationary electric furnace | 350 | 10 | 8 | 0.55 | 15.7 | 4.0 |
| Example 16 | Stationary electric furnace | 320 | 10 | 8 | 0.56 | 15.7 | 4.0 |
| Example 17 | Stationary electric furnace | 370 | 2 | 8 | 0.58 | 15.6 | 4.0 |
| Example 18 | Stationary electric furnace | 370 | 4 | 8 | 0.61 | 15.3 | 4.0 |
| Example 19 | Stationary electric furnace | 370 | 10 | 8 | 0.61 | 15.3 | 4.0 |

From Table 2, it was found that higher thermal conductivity is obtained as the heating temperature is increased and also the heating time is extended. However, there are also cases in which the thermal conductivity did not change even when the heating time is extended (see, Examples 18 and 19). Furthermore, the thermal conductivity of Comparative Example 14 to Comparative Example 18 is higher than that of Comparative Example 13 but lower than that of Examples, and thus it was not found to be a desirable temperature. The 700°C dehydration amount of the high thermal conductive boehmite of Examples is within a range of 15.2% to 15.7%. The specific surface area of the high thermal conductive boehmite of Examples is not different from the specific surface area of the non-treated boehmite of Comparative Examples, and almost no boehmite as a raw material was $\gamma$-aluminated or converted to pseudo boehmite.

[Manufacture of high thermal conductive boehmite (3)]

As for the boehmite as a raw material of Examples 20 and 21 and Comparative Examples 20 and 21 shown in Table 3, Boehmite 8 shown in Table 6 was used. As for the boehmite as a raw material of Example 22 and Comparative Example 22, Boehmite 9 shown in Table 6 was used. As for the boehmite as a raw material of Example 23 and Comparative Example 23, Boehmite 5 shown in Table 6 was used. In Example 20 to Example 23, the boehmite as a raw material was subjected to a heating treatment at a pre-determined temperature for a pre-determined time by using a stationary electric furnace to manufacture the high thermal conductive boehmite of the present invention shown in Table 3, which was then blended with a resin. In Comparative Example 20 to Comparative Example 23, as boehmite as a raw material, non-treated boehmite without undergoing the heating treatment was blended with a resin. Blending the high thermal conductive boehmite and non-treated boehmite with a resin (blending amount of the high thermal conductive boehmite and non-treated boehmite was set to the ratio for having the volume filling ratio shown in Table 3), measurement of the thermal conductivity, measurement of the 700°C dehydration amount, and measurement of the specific surface area were performed in the same manner as Manufacture of high thermal conductive boehmite (1).

[Table 3]

| | Conditions for heating treatment | | | Evaluation of thermal conductivity | | Characteristics of filler | |
|---|---|---|---|---|---|---|---|
| | Method/device for heating treatment | Temperature (°C) | Time (Hr) | Volume filling ratio (vol%) | Thermal conductivity (W/m·K) | 700°C Dehydration amount (%) | Specific surface area (m²/g) |
| Comparative Example 20 | | | | 40 | 0.88 | 16.3 | 3.3 |
| Example 20 | Stationary electric furnace | 350 | 10 | 40 | 1.18 | 15.2 | 3.3 |
| Comparative Example 21 | | | | 25 | 0.58 | 16.3 | 3.3 |
| Example 21 | Stationary electric furnace | 350 | 10 | 25 | 0.70 | 15.2 | 3.3 |
| Comparative Example 22 | | | | 25 | 0.52 | 15.8 | 19.0 |
| Example 22 | Stationary electric furnace | 350 | 10 | 25 | 0.70 | 14.0 | 18.0 |
| Comparative Example 23 | | | | 25 | 0.58 | 15.9 | 7.0 |
| Example 23 | Stationary electric furnace | 350 | 10 | 25 | 0.69 | 14.9 | 7.0 |

From Table 3, it was found that the thermal conductivity of Examples is higher than that of Comparative Examples even when the method for manufacturing boehmite as a raw material is different. Furthermore, the 700°C dehydration amount of the high thermal conductive boehmite of Examples is within a range of 14.0% to 15.2%. The specific surface area of the high thermal conductive boehmite of Example 22 was 95% of the specific surface area of the non-treated boehmite of Comparative Example 22. However, there was no difference in other Examples, and almost no boehmite as a raw material was γ-aluminated or converted to pseudo boehmite. Meanwhile, although the data were not specifically described, the thermal conductivity was improved by a heating treatment even for the case in which boehmite synthesized by hydration of transition alumina is used as a raw material, and thus it can be used as high thermal conductive boehmite.

[Manufacture of high thermal conductive boehmite (4)]

As for the boehmite as a raw material of Examples and Comparative Examples shown in Table 4, Boehmite 1 shown in Table 6 was used. In Example 24 to Example 26, the boehmite as a raw material was subjected to a heating treatment at a pre-determined temperature for a pre-determined time to manufacture the high thermal conductive boehmite of the present invention shown in Table 4, which was then blended with a resin. With regard to the method for heating treatment, a heating treatment under increased pressure, a treatment using over-heated water vapor, and a small-amount heating were performed instead of the method of using a stationary electric furnace of Manufacture of high thermal conductive boehmite (1) to (3). Meanwhile, the pressure for Example 24 was 0.5 MPa. In Comparative Example 24, as boehmite as a raw material, non-treated boehmite without undergoing the heating treatment was blended with a resin. Blending the high thermal conductive boehmite and non-treated boehmite with a resin (blending amount of the high thermal conductive boehmite and non-treated boehmite was set to the ratio for having the volume filling ratio shown in Table 4), measurement of the thermal conductivity, measurement of the 700°C dehydration amount, and measurement of the specific surface area were performed in the same manner as Manufacture of high thermal conductive boehmite (1). Meanwhile, the small-amount heating was performed by a method in which an electric furnace with internal volume of 7.5 L (manufactured by Isuzu Seisakusho, SSTS-25R) is heated in advance to 1000°C and 1 g of boehmite as a raw material, which has been thinly spread to thickness of 1.5 mm or less on a metallic petri dish, was added to the electric furnace and removed 5 seconds later. Temperature of the boehmite as a raw material which has been obtained right after the heating treatment according to this method was 390°C.

[Table 4]

| | Conditions for heating treatment | | | Evaluation of thermal conductivity | | Characteristics of filler | |
|---|---|---|---|---|---|---|---|
| | Method/device for heating treatment | Temperature (°C) | Time (Hr) | Volume filling ratio (vol%) | Thermal conductivity (W/m·K) | 700°C Dehydration amount (%) | Specific surface area (m$^2$/g) |
| Comparative Example 24 | | | | 25 | 0.57 | 16.3 | 2.0 |
| Example 24 | Heating treatment under increased pressure | 330 | 5 | 25 | 0.66 | 14.8 | 2.0 |
| Example 25 | Treatment using over-heated water vapor | 350 | 2 | 25 | 0.69 | 15.5 | 2.0 |
| Example 26 | Small-amount heating* | 1000 | (5 sec.) | 25 | 0.68 | 15.3 | 2.0 |
| *Temperature of a subject for heating was 390°C. | | | | | | | |

From Table 4, it was found that the thermal conductivity of Examples is higher than that of Comparative Examples even when the method for heating treatment is different. Furthermore, the 700°C dehydration amount of the high thermal conductive boehmite of Examples is within a range of 14.8% to 15.5%. The specific surface area of the high thermal conductive boehmite of Examples was not different from the specific surface area of the non-treated boehmite of Comparative Examples, and almost no boehmite as a raw material was γ-aluminated or converted to pseudo boehmite.

[Manufacture of high thermal conductive boehmite (5) and obtainment of thermal conductivity]

As for the boehmite as a raw material of Example 27 to Example 29 and Comparative Example 25 to Comparative Example 27 shown in Table 5, Boehmite 7 shown in Table 6 was used. As for the boehmite as a raw material of Example 30 to Example 32 and Comparative Example 28 to Comparative Example 30, Boehmite 6 shown in Table 6 was used. As for the boehmite as a raw material of Example 33 to Example 35 and Comparative Example 31 to Comparative Example 33, Boehmite 3 shown in Table 6 was used. As for the boehmite as a raw material of Example 36 to Example 38 and Comparative Example 34 to Comparative Example 36, Boehmite 2 shown in Table 6 was used. In Example 27 to Example 38, the boehmite as a raw material was subjected to a heating treatment at a pre-determined temperature for a pre-determined time by using a stationary electric furnace to manufacture the high thermal conductive boehmite of the present invention shown in Table 5, which was then blended with a resin. In Comparative Example 25 to Comparative Example 36, as boehmite as a raw material, non-treated boehmite without undergoing the heating treatment was blended with a resin. Blending the high thermal conductive boehmite and non-treated boehmite with a resin (blending amount of the high thermal conductive boehmite and non-treated boehmite was set to the ratio for having the volume filling ratio shown in Table 5), measurement of the thermal conductivity, measurement of the 700°C dehydration amount, and measurement of the specific surface area were performed in the same manner as Manufacture of high thermal conductive boehmite (1).

[Table 5]

| | Conditions for heating treatment | | | Evaluation of thermal | | Characteristics of filler | | |
|---|---|---|---|---|---|---|---|---|
| | Method/device for heating treatment | Temperature (°C) | Time (Hr) | Volume filling ratio (vol%) | Thermal conductivity (W/m·K) | 700°C Dehydration amount(%) | Specific surface area (m²/g) | Ψ (-) |
| Resin only | | | | 0 | 0.24 | - | - | - |
| Comparative Example 10 | | | | 14 | 0.39 | 16.3 | 2.0 | 0.795 |
| Comparative Example 7 | | | | 25 | 0.57 | | | |
| Comparative Example 4 | | | | 33 | 0.74 | | | |
| Comparative Example 2 | | | | 40 | 0.87 | | | |
| Comparative Example 1 | | | | 45 | 1.05 | | | |
| Example 7 | Stationary electric furnace | 350 | 10 | 14 | 0.44 | 14.9 | 2.0 | |
| Example 5 | Stationary electric furnace | 350 | 10 | 25 | 0.68 | | | |
| Example 4 | Stationary electric furnace | 350 | 10 | 33 | 0.93 | | | |
| Example 1 | Stationary electric furnace | 350 | 10 | 45 | 1.46 | | | |
| Comparative Example 25 | | | | 14 | 0.40 | 16.3 | 2.5 | 0.754 |
| Comparative Example 26 | | | | 25 | 0.57 | | | |
| Comparative Example 27 | | | | 40 | 0.88 | | | |
| Example 27 | Stationary electric furnace | 350 | 10 | 14 | 0.45 | 14.9 | 2.5 | |
| Example 28 | Stationary electric furnace | 350 | 10 | 25 | 0.70 | | | |
| Example 29 | Stationary electric furnace | 350 | 10 | 40 | 1.28 | | | |

| | Conditions for heating treatment | | | Evaluation of thermal | | Characteristics of filler | | |
|---|---|---|---|---|---|---|---|---|
| | Method/device for heating treatment | Temperature (°C) | Time (Hr) | Volume filling ratio (vol%) | Thermal conductivity (W/m·K) | 700°C Dehydration amount(%) | Specific surface area (m$^2$/g) | Ψ (-) |
| Comparative Example 28 | | | | 14 | 0.42 | | | |
| Comparative Example 29 | | | | 25 | 0.61 | 16.2 | 5.0 | 0.708 |
| Comparative Example 30 | | | | 33 | 0.77 | | | |
| Example 30 | Stationary electric furnace | 350 | 10 | 14 | 0.48 | 14.5 | 5.0 | |
| Example 31 | Stationary electric furnace | 350 | 10 | 25 | 0.74 | | | |
| Example 32 | Stationary electric furnace | 350 | 10 | 33 | 1.02 | | | |
| Comparative Example 31 | | | | 14 | 0.56 | | | |
| Comparative Example 32 | | | | 25 | 0.85 | 16.5 | 3.0 | 0.362 |
| Comparative Example 33 | | | | 29 | 1.01 | | | |
| Example 33 | Stationary electric furnace | 350 | 10 | 14 | 0.76 | | | |
| Example 34 | Stationary electric furnace | 350 | 10 | 25 | 1.32 | 15.5 | 3.0 | |
| Example 35 | Stationary electric furnace | 350 | 10 | 29 | 1.84 | | | |

EP 2 918 546 A1

14

(continued)

| | Conditions for heating treatment | | | Evaluation of thermal | | Characteristics of filler | | |
|---|---|---|---|---|---|---|---|---|
| | Method/device for heating treatment | Temperature (°C) | Time (Hr) | Volume filling ratio (vol%) | Thermal conductivity (W/m·K) | 700°C Dehydration amount(%) | Specific surface area (m$^2$/g) | Ψ (-) |
| Comparative Example 34 | | | | 14 | 0.43 | 15.8 | 2.0 | 0.665 |
| Comparative Example 35 | | | | 25 | 0.64 | | | |
| Comparative Example 36 | | | | 33 | 0.84 | | | |
| Example 36 | Stationary electric furnace | 350 | 10 | 14 | 0.49 | 14.7 | 2.0 | |
| Example 37 | Stationary electric furnace | 350 | 10 | 25 | 0.81 | | | |
| Example 38 | Stationary electric furnace | 350 | 10 | 33 | 1.16 | | | |

From Table 5, it was found that the thermal conductivity of Examples is higher than that of Comparative Examples even when the particle shape of the boehmite as a raw material shown in Table 6 is different. Furthermore, the 700°C dehydration amount of the high thermal conductive boehmite of Examples is within a range of 14.5% to 15.5%. The specific surface area of the high thermal conductive boehmite of Examples was not different from the specific surface area of the non-treated boehmite of Comparative Examples, and almost no boehmite as a raw material was γ-aluminated or converted to pseudo boehmite.

By using Mathematical Formula 1, the thermal conductivity of the high thermal conductive boehmite and the non-treated boehmite of Examples 1, 4, 5, and 7 and Comparative Examples 1, 2, 4, 7, and 10 that are illustrated in Fig. 2, Example 27 to 29 and Comparative Example 25 to Comparative Example 27 that are illustrated in Fig. 3, Example 30 to Example 32 and Comparative Example 28 to Comparative Example 30 that are illustrated in Fig. 4, Example 33 to Example 35 and Comparative Example 31 to Comparative Example 33 that are illustrated in Fig. 5, and Example 36 to Example 38 and Comparative Example 34 to Comparative Example 36 that are illustrated in Fig. 6 was calculated.

For obtaining the thermal conductivity, the following values were used.

Vf (volume filling ratio of boehmite): volume filling ratio shown in Table 5

λc (thermal conductivity of boehmite-resin composite): thermal conductivity shown in Table 5

λm (thermal conductivity of resin): 0.24 W/m·K

ψ of the boehmite of Examples 1, 4, 5, and 7 and Comparative Examples Comparative Examples 1, 2, 4, 7, and 10: 0.795

ψ of the boehmite of Example 27 to Example 29 and Comparative Example 25 to Comparative Example 27: 0.754

ψ of the boehmite of Example 30 to Example 32 and Comparative Example 28 to Comparative Example 30: 0.708

ψ of the boehmite of Example 33 to Example 35 and Comparative Example 31 to Comparative Example 33: 0.362

ψ of the boehmite of Example 36 to Example 38 and Comparative Example 34 to Comparative Example 36: 0.665

Meanwhile, since the boehmite maintains a pre-determined shape until the temperature of about 1300°C, the pre-determined shape did not change by heating at 320°C to 430°C. ψ of the thermal conductive boehmite of the present invention was not different from ψ of the boehmite as a raw material.

A graph in which the horizontal axis represents Vf (Vol%) and the vertical axis represent λc was prepared, and Vf and λc of Table 5 were plotted in the graph. Subsequently, "Vf-λc" curve obtained by inserting the above values (n is a value which is obtained as 3 ÷ ψ) and the thermal conductivity λf of any boehmite to the Mathematical Formula 1 was overlaid on the graph, and the "Vf-λc" curve closest to the plot was selected from the "Vf-λc" curves. Then, the λf value inserted to obtain the corresponding "Vf-λc" curve was obtained as the thermal conductivity of the high thermal conductive boehmite of Examples and the non-treated boehmite of Comparative Examples. The calculated value shown in each drawing, which is obtained from the "Vf-λc" curve closest to the plot, is in good match with the measured value. The thermal conductivity of the high thermal conductive boehmite of Examples and the thermal conductivity of the non-treated boehmite of Comparative Examples are as described below. The thermal conductivity of the high thermal conductive boehmite has a value which is about 2.4 to 3.3 times higher than the thermal conductivity of the non-treated boehmite of Comparative Examples.

Examples 1, 4, 5, and 7: 11.0 W/m·K

Comparative Examples 1, 2, 4, 7, and 10: 4.5 W/m·K

Example 27 to Example 29: 12.0 W/m·K

Comparative Example 25 to Comparative Example 27: 4.2 W/m·K

Example 30 to Comparative Example 32: 13.0 W/m·K

Comparative Example 28 to Comparative Example 30: 4.5 W/m·K

Example 33 to Comparative Example 35: 17.0 W/m·K

Comparative Example 31 to Comparative Example 33: 5.1 W/m·K

Example 36 to Example 38: 18.0 W/m·K

Comparative Example 34 to Comparative Example 36: 5.5 W/m·K

[Table 6]

| Boehmite as raw material | Descriptions of boehmite as raw material | Method for manufactured | | Particle shape | | |
|---|---|---|---|---|---|---|
| | | Raw material | Method for manufactured | Particle shape | Long diameter (μm) of primary particle | Aspect ratio (-) |
| Boehmite 1 | BMT-3LV manufactured by KAWAI LIME INDUSTRY Co., Ltd. | Aluminum hydroxide | Hydrothermal synthesis | Particulate shape | 4 | 2 |
| Boehmite 2 | BMT-33 manufactured by KAWAI LIME INDUSTRY Co., Ltd. | Aluminum hydroxide | Hydrothermal synthesis | Plate shape | 3 | 5 |
| Boehmite 3 | BMF-920 manufactured by KAWAI LIME INDUSTRY Co., Ltd. | Aluminum hydroxide | Hydrothermal synthesis | Flake shape | 9 | 20 |
| Boehmite 4 | BMF-520 manufactured by KAWAI LIME INDUSTRY Co., Ltd. | Aluminum hydroxide | Hydrothermal synthesis | Flake shape | 5 | 20 |
| Boehmite 5 | BMB-05 manufactured by KAWAI LIME INDUSTRY Co., Ltd. | Aluminum hydroxide | Hydrothermal synthesis | Particulate shape | 0.5 | 3 |
| Boehmite 6 | BMB-1 manufactured by KAWAI LIME INDUSTRY Co., Ltd. | Aluminum hydroxide | Hydrothermal synthesis | Particulate shape | 1 | 4 |
| Boehmite 7 | BMB-2 manufactured by KAWAI LIME INDUSTRY Co., Ltd. | Aluminum hydroxide | Hydrothermal synthesis | Particulate shape | 2.5 | 3 |
| Boehmite 8 | AOH30 manufactured by Nabaltec GmbH | Aluminum hydroxide | Hydrothermal synthesis | Particulate shape | 1 | 3 |
| Boehmite 9 | C06 manufactured by TAIMEI CHEMICALS Co., Ltd. | Aluminum dawsonite | Calcination → Hydrothermal heating | Aggregate | 0.3 | 2 |

**Claims**

1. High thermal conductive boehmite having thermal conductivity calculated in accordance with the following Mathematical Formula 1 of 11.0 W/m·K or greater;

[Mathematical Formula 1]

$$1 - Vf = (\lambda c - \lambda f)/(\lambda m - \lambda f) \times (\lambda m/\lambda c)^{(1/n)}$$

$$n = 3/\psi$$

(with the proviso that, Vf represents the volume filling ratio of boehmite, λc represents the thermal conductivity (W/m·K) of a boehmite-resin composite, λf represents the thermal conductivity (W/m·K) of boehmite, λm represents the thermal conductivity (W/m·K) of the resin, n represents the shape factor of filler particles proposed by Hamilton and Crosser, ψ represents a value calculated by dividing the surface area of a sphere that has the same volume of a boehmite particle volume by the surface area of an actual particle, and ^ represents exponentiation).

2. High thermal conductive boehmite having 700°C dehydration amount of 14.0% to 15.7%.

3. A method for manufacturing high thermal conductive boehmite, wherein boehmite is subjected to a heating treatment at 320°C to 430°C.

4. The method for manufacturing high thermal conductive boehmite according to claim 3, wherein the boehmite is subjected to a heating treatment in an atmosphere of increased pressure.

5. The method for manufacturing high thermal conductive boehmite according to claim 3, wherein the boehmite is subjected to a heating treatment using over-heated water vapor.

EP 2 918 546 A1

| INORGANIC FILLER | THERMAL CONDUCTIVITY | PRICE | INSULATING PROPERTY | WEIGHT | HARDNESS | FLAMING RETARDANCY | FILLING PROPERTY |
|---|---|---|---|---|---|---|---|
| METAL POWDER | ◎ | × | × | × | ○ | × | × |
| NITRIDE | ◎ | × | ○ | ○ | × | × | × |
| CARBIDE | ◎ | × | △ | ○ | × | × | × |
| α-ALUMINA | ○ | ○ | ○ | ○ | × | × | × |
| SILICA | △ | ○ | ○ | ○ | × | × | ◎ |
| BOEHMITE (CONVENTIONAL PRODUCT) | △ | ◎ | ○ | ○ | ○ | ○ | ○ |

◎ : EXCELLENT , ○ : GOOD、 △ : ACCEPTABLE、 × : NOT ACCEPTABLE

Fig. 1

19

△ NON-TREATED BOEHMITE、 ● HIGH THERMAL CONDUCTIVE BOEHMITE、

---- CALCULATED VALUE A、 —— CALCULATED VALUE B

| PRODUCT NAME | BOEHMITE 1 | | | |
|---|---|---|---|---|
| SHAPE | PARTICULATE SHAPE | | | |
| LONG DIAMETER (μm) | 4.00 | | | |
| SHORT DIAMETER (μm) | 2.00 | | | |
| ASPECT RATIO | 2.0 | | | |
| VOLUME FILLING RATIO (vol%) | NON-TREATED BOEHMITE | | HIGH THERMAL CONDUCTIVE BOEHMITE | |
| | MEASURED VALUE | CALCULATED VALUE | MEASURED VALUE | CALCULATED VALUE |
| 0% | 0.24 | 0.240 | 0.24 | 0.240 |
| 14% | 0.39 | 0.375 | 0.44 | 0.400 |
| 25% | 0.57 | 0.540 | 0.68 | 0.620 |
| 29% | | | | |
| 33% | 0.74 | 0.705 | 0.93 | 0.868 |
| 40% | 0.87 | 0.887 | | |
| 45% | 1.05 | 1.044 | 1.46 | 1.460 |
| | THERMAL CONDUCTIVITY | 4.5 | THERMAL CONDUCTIVITY | 11.0 |

Fig. 2

△ NON-TREATED BOEHMITE、 ● HIGH THERMAL CONDUCTIVE BOEHMITE、

---- CALCULATED VALUE A、 — CALCULATED VALUE B

| PRODUCT NAME | BOEHMITE 7 | | | |
|---|---|---|---|---|
| SHAPE | PARTICULATE SHAPE | | | |
| LONG DIAMETER (μm) | 2.50 | | | |
| SHORT DIAMETER (μm) | 0.85 | | | |
| ASPECT RATIO | 2.9 | | | |
| VOLUME FILLING RATIO (vol%) | NON-TREATED BOEHMITE | | HIGH THERMAL CONDUCTIVE BOEHMITE | |
| | MEASURED VALUE | CALCULATED VALUE | MEASURED VALUE | CALCULATED VALUE |
| 0% | 0.24 | 0.240 | 0.24 | 0.240 |
| 14% | 0.40 | 0.379 | 0.45 | 0.413 |
| 25% | 0.57 | 0.547 | 0.70 | 0.655 |
| 29% | | | | |
| 33% | | | | |
| 40% | 0.88 | 0.895 | 1.28 | 1.270 |
| 45% | | | | |
| | THERMAL CONDUCTIVITY | 4.2 | THERMAL CONDUCTIVITY | 12.0 |

Fig. 3

△ NON-TREATED BOEHMITE、 ● HIGH THERMAL CONDUCTIVE BOEHMITE、

--- CALCULATED VALUE A、 — CALCULATED VALUE B

| PRODUCT NAME | BOEHMITE 6 | | | |
|---|---|---|---|---|
| SHAPE | PARTICULATE SHAPE | | | |
| LONG DIAMETER (μm) | 1.00 | | | |
| SHORT DIAMETER (μm) | 0.25 | | | |
| ASPECT RATIO | 4.0 | | | |
| VOLUME FILLING RATIO (vol%) | NON-TREATED BOEHMITE | | HIGH THERMAL CONDUCTIVE BOEHMITE | |
| | MEASURED VALUE | CALCULATED VALUE | MEASURED VALUE | CALCULATED VALUE |
| 0% | 0.24 | 0.240 | 0.24 | 0.240 |
| 14% | 0.42 | 0.390 | 0.48 | 0.427 |
| 25% | 0.61 | 0.575 | 0.74 | 0.697 |
| 29% | | | | |
| 33% | 0.77 | 0.758 | 1.02 | 1.009 |
| 40% | | | | |
| 45% | | | | |
| | THERMAL CONDUCTIVITY | 4.5 | THERMAL CONDUCTIVITY | 13.0 |

Fig. 4

△ NON-TREATED BOEHMITE、 ● HIGH THERMAL CONDUCTIVE BOEHMITE、

--- CALCULATED VALUE A、 — CALCULATED VALUE B

| PRODUCT NAME | BOEHMITE 3 | | | |
|---|---|---|---|---|
| SHAPE | FLAKE SHAPE | | | |
| LONG DIAMETER (μm) | 9.00 | | | |
| SHORT DIAMETER (μm) | 0.45 | | | |
| ASPECT RATIO | 20.0 | | | |
| VOLUME FILLING RATIO (vol%) | NON-TREATED BOEHMITE | | HIGH THERMAL CONDUCTIVE BOEHMITE | |
| | MEASURED VALUE | CALCULATED VALUE | MEASURED VALUE | CALCULATED VALUE |
| 0% | 0.24 | 0.240 | 0.24 | 0.240 |
| 14% | 0.56 | 0.517 | 0.76 | 0.629 |
| 25% | 0.85 | 0.854 | 1.32 | 1.416 |
| 29% | 1.01 | 1.002 | 1.84 | 1.816 |
| 33% | | | | |
| 40% | | | | |
| 45% | | | | |
| | THERMAL CONDUCTIVITY | 5.1 | THERMAL CONDUCTIVITY | 17.0 |

Fig. 5

△ NON-TREATED BOEHMITE、 ● HIGH THERMAL CONDUCTIVE BOEHMITE、

···· CALCULATED VALUE A、 — CALCULATED VALUE B

| PRODUCT NAME | BOEHMITE 2 | | | |
|---|---|---|---|---|
| SHAPE | PLATE SHAPE | | | |
| LONG DIAMETER (µm) | 3.00 | | | |
| SHORT DIAMETER (µm) | 0.60 | | | |
| ASPECT RATIO | 5.0 | | | |
| VOLUME FILLING RATIO (vol%) | NON-TREATED BOEHMITE | | HIGH THERMAL CONDUCTIVE BOEHMITE | |
| | MEASURED VALUE | CALCULATED VALUE | MEASURED VALUE | CALCULATED VALUE |
| 0% | 0.24 | 0.240 | 0.24 | 0.240 |
| 14% | 0.43 | 0.394 | 0.49 | 0.429 |
| 25% | 0.64 | 0.625 | 0.81 | 0.768 |
| 28% | | | | |
| 33% | 0.84 | 0.843 | 1.16 | 1.154 |
| 40% | | | | |
| 45% | | | | |
| | THERMAL CONDUCTIVITY | 5.5 | THERMAL CONDUCTIVITY | 18.0 |

Fig. 6

## INTERNATIONAL SEARCH REPORT

International application No.

PCT/JP2013/062591

A. CLASSIFICATION OF SUBJECT MATTER
*C01F7/02*(2006.01)i

According to International Patent Classification (IPC) or to both national classification and IPC

B. FIELDS SEARCHED

Minimum documentation searched (classification system followed by classification symbols)
C01F1/00-17/00, C08K3/22

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho  1971-2013   Toroku Jitsuyo Shinan Koho   1994-2013

Electronic data base consulted during the international search (name of data base and, where practicable, search terms used)
Science Direct, CiNii, WPI, CAplus(STN), JSTPlus(JDreamIII)

C. DOCUMENTS CONSIDERED TO BE RELEVANT

| Category* | Citation of document, with indication, where appropriate, of the relevant passages | Relevant to claim No. |
|---|---|---|
| X<br>A | Kazuro KAWAMURA, Harumi ENDO, "Characteristics of Adsorption of Moisture on Boehmite and Anhydrous Alumina", Journal of the Ceramic Society of Japan, vol.107, no.4, The Ceramic Society of Japan, 01 April 1999 (01.04.1999), pages 335 to 358 | 1-3<br>4,5 |
| A | JP 7-267633 A (Kyocera Corp.), 17 October 1995 (17.10.1995), claims; paragraphs [0007], [0021] (Family: none) | 1-5 |
| A | JP 2010-120813 A (Kawai Lime Industrial Co., Ltd.), 03 June 2010 (03.06.2010), claim 11; paragraph [0017] (Family: none) | 1-5 |

☒ Further documents are listed in the continuation of Box C. ☐ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>25 June, 2013 (25.06.13) | Date of mailing of the international search report<br>09 July, 2013 (09.07.13) |
|---|---|
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2013/062591

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2000-44232 A  (Japan Energy Corp.),<br>15 February 2000 (15.02.2000),<br>claims; paragraph [0023]<br>(Family: none) | 1-5 |

Form PCT/ISA/210 (continuation of second sheet) (July 2009)

**INTERNATIONAL SEARCH REPORT**

| International application No. |
|---|
| PCT/JP2013/062591 |

**Box No. II**      **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**      **Observations where unity of invention is lacking (Continuation of item 3 of first sheet)**

This International Searching Authority found multiple inventions in this international application, as follows:
    Since document 1 discloses high thermal conductive boehmite that satisfies all of the requirements in claims 1 and 2, the inventions in claims 1 and 2 are not considered novel over the invention disclosed in document 1, and, therefore, do not have a special technical feature.
    Therefore, two inventions (invention groups), which comprise the inventions of claims 1 and 2 and the inventions of claims 3-5, are involved in claims.
    Meanwhile, the inventions of claims 1 and 2 having no special technical feature are classified into invention 1.
(Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

    ☐ The additional search fees were accompanied by the applicant's protest but the applicable protest fee was not paid within the time limit specified in the invitation.

    ☐ No protest accompanied the payment of additional search fees.

Form PCT/ISA/210 (continuation of first sheet (2)) (July 2009)

**INTERNATIONAL SEARCH REPORT**

International application No.

PCT/JP2013/062591

Continuation of Box No.III of continuation of first sheet(2)

Document 1: Kazuro KAWAMURA, Harumi ENDO, "Characteristics of Adsorption of Moisture on Boehmite and Anhydrous Alumina", Journal of the Ceramic Society of Japan, vol.107, no.4, The Ceramic Society of Japan, 01 April 1999 (01.04.1999), pages 335 to 358.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011184507 A

- JP 2011127053 A

**Non-patent literature cited in the description**

- **KATSUHIKO KANARI.** *Thermal Conductivity of Composite System, Polymer,* 1977, vol. 26 (8), 557-561